Europäisches Patentamt

European Patent Office

Office européen des brevets

(11) Publication number: **0 494 498 A1**

# EUROPEAN PATENT APPLICATION

(21) Application number: **91310798.3**

(22) Date of filing: **22.11.91**

(51) Int. Cl.5: **F16J 15/56**

(30) Priority: **04.01.91 US 640133**

(43) Date of publication of application:
**15.07.92 Bulletin 92/29**

(84) Designated Contracting States:
**DE DK ES FR GB IT SE**

(71) Applicant: **W.S. SHAMBAN & COMPANY**
**2951 28th Street Suite 2010**
**Santa Monica, CA 90405(US)**

(72) Inventor: **Traub, Henry A.**
**825 Paseo Miramar**
**Pacific Palisades, California 90272(US)**

(74) Representative: **Godsill, John Kenneth et al**
**Haseltine Lake & Co. Hazlitt House 28**
**Southampton Buildings Chancery Lane**
**London WC2A 1AT(GB)**

(54) **Multi-modulus seal ring.**

(57) A multi-modulus seal ring for sealing at both high and low pressures includes a low modulus portion (12) with an interior edge (30) and a sealing surface (36) located adjacent to the interior edge. A high modulus portion (14) is also provided which has an interior edge (38) and a sealing surface (28) located adjacent to its interior edge (38). The interior edge (30) of the low modulus portion and the interior edge (38) of the high modulus portion are bonded together along a boundary line to provide an integral multi-modulus seal.

Fig. 2.

The present invention relates generally to multimodulus sealing rings for effecting a seal between relatively movable parts in both static and dynamic modes and at both high and low pressures.

Numerous different seal configurations have been designed for providing a seal between relatively reciprocating surfaces, such as a piston or shaft and the cylinder housing the piston, under both high and low pressure conditions. A number of different multi-element seal assembly embodiments are disclosed in U.S. patent nos. 4,231,578; 4,268,045; 4,566,702; and 4,570,944. The seal assemblies are designed to provide an effective seal during both high pressure and low pressure conditions. The contents of those four patents are hereby incorporated by reference.

The multi-element seals disclosed in the above patents generally include a high pressure seal element or ring and a low pressure seal element or ring. The high pressure seal ring is typically made from high modulus materials such as polytetrafluoroethylene. The low pressure seal ring is typically made from a low modulus elastomeric material such as rubber or other suitable synthetic or natural material having the same elastic properties as rubber. An elastomer energizer ring is also included in the sealing assembly to provide biasing of the sealing surfaces of the rings against the surface to be sealed at low pressures.

Both the high pressure seal ring and the low pressure seal ring are conventionally housed within a groove located in one of the reciprocating surfaces. The two seal rings are typically located side by side within the groove and have a common area of sealing contact located around the bondary between the two rings. As a result, the area of sealing contact or seal footprint includes interior portions from both the high pressure and low pressure seal rings.

A number of seal configurations are designed so that the low pressure seal ring also functions as the elastomer energizer. In this type of configuration, the low pressure seal ring typically seats against the bottom of the groove, with the high pressure seal ring being located between a portion of the low pressure seal ring and the reciprocating surface to be sealed. The low pressure seal ring is typically Y shaped to provide a seal lip portion or wiper arm which extends out past the end of the high pressure seal ring to provide direct sealing contact at low pressure between the low pressure seal ring and the reciprocating surface to be sealed.

A common problem with the above multi-element seals is excessive wear and abrasion of the low pressure seal ring. The portion of the low pressure seal ring which contacts the reciprocating surface to be sealed and the boundary with the high pressure seal ring typically wears and abrades much more rapidly than the harder high pressure seal.

According to one aspect of the invention, there is provided a multi-modulus seal ring for use in providing a seal between first and second surfaces at both high and low pressures, the ring comprising a low modulus portion and a high modulus portion, each having a sealing point or surface to provide a seal foot print on one of said first and second surfaces, characterised in that there are means bonding facing surfaces of said portions together.

We have discovered that some of the wear and abrasion of multi-element seals is due to the low pressure seal ring's ability to move independently of the high pressure seal ring. This allows the low pressure seal ring to be pinched and abraded by the high pressure seal ring and reciprocating surfaces. We further discovered that the pinching and abrasion of the low pressure seal ring is reduced substantially by bonding the low pressure seal ring to the high pressure seal ring in order to form a single multi-modulus seal ring. The integral multi-modulus seal ring provides all of the advantages of a dual element seal configuration while at the same time reducing wear and abrasion of the low pressure seal ring.

A multi-modulus seal ring in accordance with one embodiment includes a low modulus portion having an exterior edge, an interior edge and a sealing surface located adjacent to the interior edge. That seal ring also includes a high modulus portion which has an exterior edge, an interior edge and a sealing surface located adjacent to the interior edge. The interior edge of the low modulus portion is bonded to the interior edge of the high modulus portion along a boundary line to provide an integral multi-modulus seal ring in which the bond is continuous around the ring. The footprint of the multi-modulus seal ring during sealing operations is located at the boundary line so that both high modulus and low modulus material are present for sealing contact.

The multi-modulus seal ring may be used in combination with a separate elastomer energizer. Alternatively, the low pressure seal ring may function as an elastomer energizer to provide a single elastomer energizer/seal ring. The elastomer/energizer ring may be bound to the high pressure seal ring along the entire boundary between the two rings.

Such multi-modulus seal rings are well-suited to be designed for use in equipment operated under harsh conditions, such as high frequency reciprocating motion, because of the increased wear and abrasion resistance of the low pressure ring. Such multi-modulus seal rings are also well-suited to be designed for use in equipment subjected to repeated temperature and pressure cycling. The wear and abrasion resistance of the multi-modulus seal ring can increase seal life and thereby decrease equipment down-time due to frequent seal failures.

For a better understanding of the invention and to show how the same may be carried into effect, reference will now be made, by way of example, to the accompanying drawings, in which:

Figure 1 is an exploded view of a seal ring;

Figure 2 is a sectional view of the seal ring shown in Figure 1, mounted within a groove in a cylinder wall for sealing a reciprocating piston;

Figure 3 is an alternative embodiment of a seal ring; and

Figure 4 is a sectional view of the alternative seal ring shown in Figure 3, also mounted within the groove of a cylinder wall for sealing a reciprocating piston.

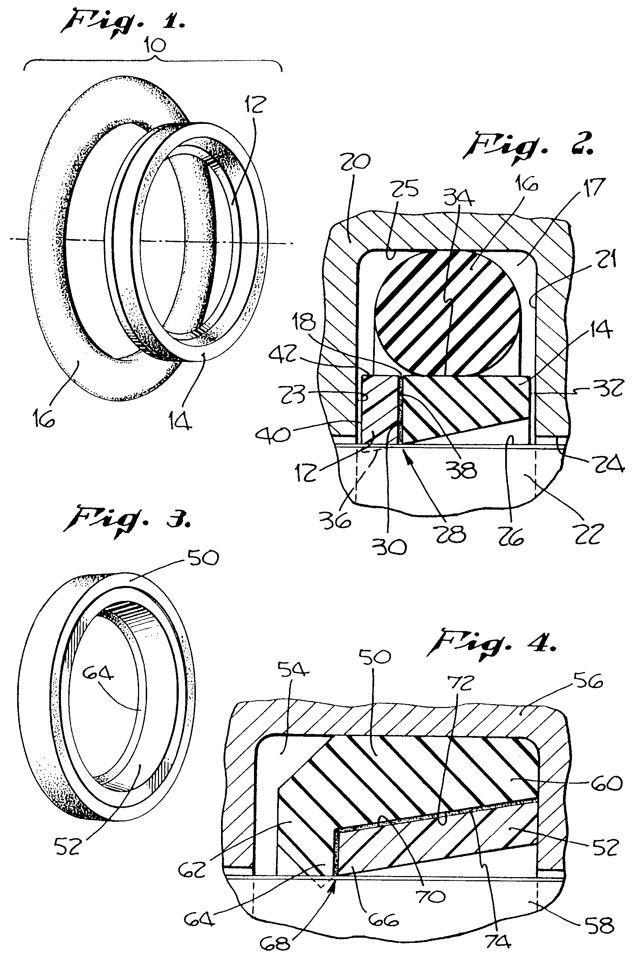

A seal assembly 10 shown generally in Figures 1 and 2 includes a low pressure seal ring 12, high pressure seal ring 14 and an elastomer energizer or o-ring, 16. The seal assembly 10 is designed for use in sealing relatively reciprocating parts, such as cylinders and pistons or shafts commonly used in hydraulic devices and equipment. The seal assembly 10 is well-suited for use in hydraulic equipment where pressures range from 0 psi up to about 5000 psi and higher. Typical equipment in which the seal assembly 10 may be used includes hydraulic actuators, landing gears, force multipliers, valves, and other equipment where a durable high-low pressure fluid seal assembly is required.

Referring to Fig. 2, the seal assembly 10 is shown in position for providing a seal between a first reciprocating surface, such as piston 22 and second reciprocating surface, such as cylinder 20. The inner surface 24 of cylinder 20 defines a first reciprocating surface. The outer surface 26 on piston 22 defines a second reciprocating surface. The first and second reciprocating surfaces are rotatable about a common longitudinal axis. Both surfaces are also movable back and forth parallel to the common longitudinal axis.

The seal assembly 10 is shown in position within groove 17 in cylinder 20 for providing an internal seal with piston 22. Alternatively, a groove may be provided in piston 22 for housing the seal assembly. In this case, the seal assembly configuration would be reversed to provide an external seal between the piston and cylinder.

During relative reciprocal movement of piston 22 and cylinder 20, the seal assembly 10 will be subjected to a wide range of pressures ranging from relatively high pressures of 5,000 PSI and above, down to relatively low pressures in the range of a few PSI. At high pressures, the majority of sealing action on the cylinder 20 is provided by the high pressure seal ring 14. At lower pressures, the majority of the sealing action on a cylinder 20 provided by the low pressure seal ring 12. At intermediate pressures, both the high pressure seal ring 14 and the low pressure seal ring 12 contribute to the sealing action provided by the seal assembly 10.

As shown in Figure 2, the high pressure seal ring 14 includes an inner sealing point 28 for sealing contact with the piston surface 26. The high pressure seal ring 14 also includes a bonding surface 30 along which the low pressure seal ring 12 and the high pressure seal ring 14 are bonded together. The high pressure seal ring further includes a right end portion 32 which is adjacent to right wall 21 of the groove 17 in cylinder 20. The high pressure seal ring 14 may be made from any suitable relatively high modulus, high pressure seal material such as polytetrafluoroethylene.

Still referring to Fig. 2, the low pressure seal ring 12 includes an angled seal surface 36. The angled seal surface 36 is pictured in its compressed state with the dashed lines indicating its uncompressed shape. The low pressure seal ring 12 also includes a bonding surface 38 along which the low pressure seal ring 12 and the high pressure seal ring 14 are bonded together. The left end portion 40 of the low pressure seal ring 12 is designed to be spaced from a left wall 23 of the groove 17 of the cylinder 20. The low pressure seal ring 12 also includes a top surface 42. The low pressure seal ring 12 may be made from any suitable low modulus material such as natural or synthetic rubber.

The low pressure seal ring 12 is bonded to the high pressure seal ring 14 along their respective bonding surfaces 38 and 30. The two bonding surfaces are bonded together with an adhesive layer 18. The adhesive which is used to bond the two rings together can be any of the known adhesives for attaching low modulus materials, such as rubber, to high modulus materials, such as polytetrafluoroethylene. The adhesive is resistant to hydraulic fluid and is capable of withstanding the temperature and pressure variations to which the seal assembly is subjected.

The adhesive layer 18 extends substantially along the entire length of the interface between the two seal ring bonding surfaces 38 and 30. It is preferred that the adhesive layer 18 extend to the intersealing point 28 where the common sealing footprint of the low pressure sealing ring 12 and high pressure sealing ring 14 is located. This insures a single, integral multi-modulus seal footprint where movement of the low pressure seal 12 independent of the high pressure seal ring 14 is reduced. As a result, abrasion and wear of the low pressure seal ring 12 is reduced.

The bonding surfaces 38 and 30 of the low and high pressure seal rings may be bonded together using, instead of a bonding layer of adhesive, other techniques which give a secure and lasting bond between the surfaces.

The O-ring 16 is an elastomer energizer which is spaced from the right wall 21, contacts the inner wall 25 and is spaced from the left wall 23 of the groove 19 of the cylinder 20. The O-ring 16 is designed to exert sufficient sealing pressure against the O-ring contact surface 34 of the integral low and high pressure seal rings 12 and 14 to maintain sealing contact with the surface 26 of the piston 22 at low pressures.

A second preferred embodiment is shown in FIGS. 3 and 4. This embodiment is designed to provide the same operating features as the first embodiment except that the low pressure seal ring is designed to also function as the elastomer energizer or o-ring. This embodiment includes a low pressure seal ring 50 and high pressure seal ring 52. The two seal rings are housed within a groove 54 which is located within cylinder 56. The seal is designed for sealing contacat with piston 58.

The low pressure seal ring 50 includes an energizer portion 60 and a sealing portion 62. The sealing portion 62 includes a sealing lip 64 which is shown in the compressed state. The uncompressed state of sealing lip 64 is shown in dashed lines. The low pressure sealing lip 64 and sealing point 66 of the high pressure seal ring 52 contact the piston 58 at the seal footprint 68.

The surfaces 70 and 72 on the high pressure and low pressure seal rings, respectively, are bonded together with an adhesive layer 74. Preferably, the adhesive layer extends along the entire boundary between the two seal rings to provide an integral multi-modulus seal ring. It is preferred that the adhesive layer 74 extend all the way to the low pressure sealing lip 64 and high pressure sealing tip 66. Again, this insures that the two seal rings are securely bonded together at the seal footprint.

The present invention has application to other multi-element seal assemblies wherein both high modulus and low modulus materials are used to provide a common sealing footprint.

Having thus described exemplary embodiments of the present invention, it should be noted by those skilled in the art that the within disclosures are exemplary only in that various other alternatives, adaptions and modifications may be made within the scope of the present invention. For example, multi-modulus seal rings are possible wherein more than two rings are bonded together. Accordingly, the present invention is not limited to the specific embodiments as illustrated herein.

**Claims**

1. A multi-modulus seal ring for use in providing a seal between first and second surfaces at both high and low pressures, the ring comprising a low modulus portion (12) and a high modulus portion (14), each having a sealing point or surface (36, 28) to provide a seal foot print on one of said first and second surfaces, characterised in that there are means (18) bonding facing surfaces (38, 30) of said portions together.

2. A multi-modulus seal ring according to claim 1 wherein said low modulus portion comprises an elastomer.

3. A multi-modulus seal ring according to claim 2 wherein said elastomer is rubber.

4. A multi-modulus seal ring according to claim 1, 2 or 3 wherein said high modulus portion comprises polytetrafluoroethylene.

5. A multi-modulus seal ring according to any one of the preceding claims wherein said bonding means (18) is an adhesive layer located between said facing surfaces (38, 30).

6. A multi-modulus seal ring according to any one of the preceding claims wherein the bonding extends substantially to said seal foot print.

7. A multi-modulus seal ring according to any one of the preceding claims and comprising energizing ring means (16, 60) for providing sealing pressure at low pressures.

8. A multi-modulus seal ring according to claim 7, wherein said ring means is an additional ring (16) and is elastomeric.

9. A multi-modulus seal ring according to claim 8, wherein the additional ring (16) is of rubber.

10. A multi-modulus seal ring according to claim 7, wherein the ring means is an integral part (60) of the low modulus portion (12).

11. A seal assembly comprising first and second surfaces and a seal ring, according to any one of the preceding claims, providing a seal between said surfaces.

Fig. 1.

Fig. 2.

Fig. 3.

Fig. 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | DE-A-2 049 575  (EBERSPÄCHER) <br> * Whole document * <br> --- | 1-3,5-7 ,10,11 | F 16 J   15/56 |
| X | GB-A-1 019 523  (GEORGES ANGUS) <br> * Whole document * <br> --- | 1-3,5,6 | |
| A | FR-A-2 412 013  (SEALOL) <br> * Whole document * <br> --- | 1-3 | |
| A | DE-C-3 443 220  (HUNGER) <br> * Whole document * <br> ----- | 1,5 | |

TECHNICAL FIELDS
SEARCHED (Int. Cl.5)

F 16 J

The present search report has been drawn up for all claims

| Place of search | Date of completion of the search | Examiner |
|---|---|---|
| THE HAGUE | 06-04-1992 | LEGER M.G.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

           .................................................
& : member of the same patent family, corresponding
    document

EPO FORM 1503 03.82 (P0401)